# EUROPÄISCHE PATENTSCHRIFT

(11) **EP 4 334 102 B1**
(45) Veröffentlichungstag und Bekanntmachung des Hinweises auf die Patenterteilung: **09.09.2026**
(21) Anmeldenummer: 21726356.5
(22) Anmeldetag: 07.05.2021
(51) Int. Cl.: B29C 33/34, B29C 41/14, B29C 41/34, G05B 19/418, B29D 99/00, B29L 31/48

(54) **PRODUKTIONSANLAGE**
PRODUCTION PLANT
USINE DE PRODUCTION

(43) Veröffentlichungstag der Anmeldung: 13.03.2024
(73) Patentinhaber: Schröder, Holger, 27432 Bremervörde-Bevern (DE)
(72) Erfinder: Schröder, Holger, 27432 Bremervörde-Bevern (DE)
(74) Vertreter: Torggler & Hofmann Patentanwälte - Rankweil
(86) Internationale Anmeldenummer: PCT/EP2021/062181
(87) Internationale Veröffentlichungsnummer: WO 2022/233433

(56) Entgegenhaltungen:
- CN-A- 107 053 561
- JP-U- S52 142 977
- US-A- 2 779 055
- US-A- 3 677 670
- US-A- 3 907 482

## Beschreibung

Die vorliegende Erfindung betrifft eine Produktionsanlage gemäß des Oberbegriffs des Patentanspruchs 1.

Beim Stand der Technik wird bei Produktionsanlagen zur Herstellung von dünnwandigen Polymerprodukten als Transportvorrichtung eine endlos umlaufende Kette verwendet, an der die Formen in fixen Abständen zueinander angeordnet sind. Die Kette wird mittels eines Motors oder mehreren Motoren angetrieben und transportiert die Formen in ihrer fixen Konfiguration von einer Station zur nächsten und durch diese Stationen hindurch. Aufgrund ihrer Länge ist die Kette insgesamt in der Regel sehr schwer. Sie muss häufig gewartet und kontinuierlich geschmiert werden und sorgt beim Betrieb der Produktionsanlage für Vibrationen und auch für eine erhebliche Lärmbelästigung. Wegen der hohen Zugbelastungen ist die Lebensdauer dieser Ketten sehr begrenzt. Sie liegt häufig unter vier Jahren. Aufgrund der Verwendung einer Kette als Transportvorrichtung werden beim Stand der Technik die Formen zwangsweise überall mit der gleichen Geschwindigkeit bewegt. Dies bedeutet, dass die Transportgeschwindigkeit der Formen in der Produktionsanlage durch die langsamste Bearbeitungsstation bzw. den langsamsten Bearbeitungsprozess vorgegeben wird. Ein weiteres Problem der beim Stand der Technik bekannten Transportvorrichtungen besteht darin, dass beim Entgleisen der Kette oder irgendeinem anderen Problem dies automatisch zu längeren Stillständen der gesamten Produktionsanlage führt. Außerdem kommt es in Folge der Verwendung der Kette als Transportvorrichtung zu einer erheblichen Schmutzproduktion und auch zu einer Wärmeverschleppung, wenn mit den Formen Stationen durchfahren werden, bei denen die Formen und damit auch die Kette erhitzt werden.

Gattungsgemäße Produktionsanlagen sind aus der US 3,677,670 A bekannt.

Aufgabe der Erfindung ist es daher, eine neue Produktionsanlage der oben genannten Art vorzuschlagen.

Zur Lösung dieser Aufgabe wird eine Produktionsanlage gemäß Patentanspruch 1 vorgeschlagen.

Es ist somit vorgesehen, dass die Transportvorrichtung eine Schienenanordnung und eine Vielzahl von auf der Schienenanordnung verfahrbaren Schienenfahrzeugen aufweist, wobei auf den Schienenfahrzeugen jeweils zumindest eine der Formen angeordnet ist.

Es ist somit eine Grundidee der Erfindung, die beim Stand der Technik als Transportvorrichtung verwendete Kette durch eine Schienenanordnung und eine Vielzahl von auf der Schienenanordnung verfahrbaren Schienenfahrzeugen zu ersetzen, wobei auf den Schienenfahrzeugen jeweils eine oder mehrere der Formen angeordnet sind.

Auf der Schienenanordnung können die Schienenfahrzeuge die auf ihnen angeordneten Formen zwischen den Stationen und auch, soweit gewünscht, durch die Stationen hindurch transportieren. Bei der Schienenanordnung handelt es sich dabei um ein Schienennetz, welches in der Regel Schienen und Weichen umfasst. Dabei wird darauf hingewiesen, dass die Schienenanordnung und deren Schienen und/oder Weichen sehr unterschiedlich ausgebildet sein können. Ein Schienenfahrzeug kann z.B. auf einer einzelnen Schiene oder auch auf zwei oder mehr parallel zueinander verlaufenden Schienen der Schienenanordnung fahren. Die Schienen der Schienenanordnung können unter anderem sowohl auf dem Boden als auch an der Decke als auch an einer Wand eines entsprechenden Gebäudes verlaufen bzw. angeordnet sein. Es sind auch Aufständerungen oder abgehängte Konstruktionen möglich, um die Schienen der Schienenanordnung daran zu befestigen bzw. abzustützen. Die auf der Schienenanordnung verfahrbaren Schienenfahrzeuge können auch als Shuttle bezeichnet werden. Die Minimalzahl der Schienenfahrzeuge beträgt zwei. In der Regel ist aber bei erfindungsgemäßen Produktionsanlagen eine große Anzahl von Schienenfahrzeugen im Einsatz. Erfindungsgemäße Produktionsanlagen umfassen mehrere voneinander verschiedene Stationen, an denen verschiedene Bearbeitungsprozesse bei der Herstellung der dünnwandigen Polymerprodukte durchgeführt werden können. Grundsätzlich können hier alle Arten von Stationen, wie sie beim Stand der Technik bekannt sind, in erfindungsgemäße Produktionsanlagen eingebunden werden. Es kann sich z.B. um Reinigungsstationen, Trocknungsstationen, Stationen zur Trennschichtaufbringung und/oder zum Auslaugen, um Gelingstationen, um Tauchstationen, um Sprühstationen, um Stationen zum Beschichten der Formen mittels Fluten, um Stationen zum Auslaugen oder Chlorieren oder anderen Oberflächenbehandlungen, um Formwechselstationen und/oder um Abziehstationen zum Abziehen der fertigen Produkte von den Formen handeln. Eine erfindungsgemäße Produktionsanlage umfasst aber jedenfalls zumindest eine Station zur Ablagerung von Polymer an den Formen. Nach der Ablagerung des Polymers erfolgt dann in der Regel auch die Polymerisation auf der Form. Die Schienenanordnung kann in ihrer Form und Länge an die Anordnung und Anzahl der verschiedenen, für die jeweilige Produktionsanlage benötigten Stationen sehr flexibel angepasst werden. Das Gleiche gilt für die Anzahl der Schienenfahrzeuge. Auch hier ist eine sehr gute Skalierbarkeit bei der Erfindung gegeben. Die Anzahl der auf der Schienenanordnung verfahrbaren Schienenfahrzeuge kann auch sehr flexibel an die jeweils benötigten Produktionskapazitäten angepasst werden. Es ist auch möglich, auf den Schienenfahrzeugen unterschiedliche Formen anzuordnen. Es können mit der Erfindung auch in derselben Produktionsanlage gleichzeitig unterschiedliche Produktionsabläufe, auch mit unterschiedlichen Materialen, realisiert werden, um so unterschiedliche Produkte oder unterschiedlich farbige Produkte und dergleichen in derselben Produktionsanlage herstellen zu können.

Im Sinne der Erhöhung der Effektivität und Produktivität der Produktionsanlage können Stationen, welche mehr Zeit für den jeweiligen Bearbeitungsschritt benötigen, auch an parallel zueinander angeordneten Schienen der Schienenanordnung angeordnet sein, sodass bei diesen mehr Zeit benötigenden Prozessen eine Vielzahl von Schienenfahrzeugen mit einer entsprechenden Vielzahl von Formen in einer langsamen Geschwindigkeit auf diesen parallel zueinander angeordneten Schienen der Schienenanordnung verfahren werden können, während in anderen Bereichen der Schienenanordnung die Schienenfahrzeuge mit einer höheren Geschwindigkeit verfahren werden können. Insgesamt werden hierdurch eine wesentlich höhere Flexibilität und Produktivität der Produktionsanlage gegenüber dem Stand der Technik erzielt. Darüber hinaus wird auch die Produktionssicherheit deutlich gesteigert, da Probleme mit einzelnen Schienenfahrzeugen bzw. der Ausfall einzelner Schienenfahrzeuge einfach behoben werden kann und dies nicht automatisch zum Gesamtausfall der Produktionsanlage führt, wie dies beim Stand der Technik mit der Kette als Transportvorrichtung der Fall ist.

Weitere Vorteile erfindungsgemäßer Produktionsanlagen gegenüber dem Stand der Technik sind, dass sie wesentlich energieeffektiver betrieben werden können und auch die Möglichkeit zur Verfügung stellen, den Automatisierungsgrad weiter zu erhöhen. Erfindungsgemäße Produktionsanlagen können aufgrund der neuartigen Art der Transportvorrichtung in der Regel mit weniger Personal betrieben werden, als dies beim Stand der Technik möglich ist.

Es wird darauf hingewiesen, dass Schienenfahrzeuge von erfindungsgemäßen Produktionsanlagen Laufräder und gegebenenfalls auch Führungsrollen zum Verfahren auf der Schienenanordnung aufweisen können. Dies ist aber nicht zwingend notwendig. Es kann sich auch um andere Arten von Schienenfahrzeugen handeln, welche nicht mittels Laufrädern auf den Schienenanordnung verfahrbar sind. Die Schienenfahrzeuge und die Schienenanordnung können, wie weiter hinten noch im Detail erläutert, z.B. auch in der Art einer Magnetschwebebahn z.B. mit elektrischen Linearmotoren ausgerüstet sein. Z.B. in diesem Fall kann auf Laufräder und/oder Führungsrollen vollständig verzichtet werden.

Erfindungsgemäße Produktionsanlagen können z.B. zur Herstellung von Handschuhen, aber auch zur Herstellung von anderen, insbesondere dünnwandigen, Polymerprodukten wie z.B. Kondomen und dergleichen verwendet werden. Die Produkte können mit erfindungsgemäßen Produktionsanlagen aus unterschiedlichsten Polymeren und/oder deren Kombinationen wie z.B. Naturkautschuk, Latex, Nitril, Polyvinylchlorid, Polyethylen, Synthese-Kautschuk, Polyamid, Nylonacryl, thermoplastischen Elastomeren, Polyurethan usw. hergestellt werden.

Besonders bevorzugte Ausgestaltungsformen der Erfindung sehen vor, dass die Schienenfahrzeuge zumindest bereichsweise hintereinander auf der Schienenanordnung angeordnet sind, wobei es Betriebszustände gibt, in denen zumindest eines der Schienenfahrzeuge zwischen dem davor und dem dahinter angeordneten Schienenfahrzeug unabhängig von der Geschwindigkeit des davor und des dahinter angeordneten Schienenfahrzeugs auf der Schienenanordnung verfahrbar ist. In anderen Worten ist bei diesen Ausgestaltungsformen der Erfindung also vorgesehen, dass in gewissen Betriebszuständen, in denen dies die Abstände zwischen dem davor und dem dahinter angeordneten Schienenfahrzeug zulassen, die Schienenfahrzeuge unabhängig voneinander mit verschiedenen Geschwindigkeiten auf der Schienenanordnung verfahrbar sind. Die Verwendung der einzelnen Schienenfahrzeuge auf der Schienenanordnung lässt es also zu, die jeweilige Momentangeschwindigkeit der Schienenfahrzeuge sehr flexibel an die vor Ort gerade, z.B. durch den jeweiligen Produktionsprozess benötigte Geschwindigkeit anzupassen. So können die Schienenfahrzeuge mit ihren Formen diejenigen Stationen langsam durchfahren, in denen dies der Produktionsprozess fordert, während die Schienenfahrzeuge in anderen Bereichen der Schienenanordnung, in denen dies möglich ist, mit deutlich höherer Geschwindigkeit verfahren werden, um so die Effektivität und Produktivität der Produktionsanlage möglichst weiter zu optimieren.

Günstig ist es bei der Erfindung auch, wenn zumindest einige der Schienenfahrzeuge, vorzugsweise jedes Schienenfahrzeug, zum Verfahren entlang der Schienenanordnung individuell antreibbar sind bzw. ist. Alternativ oder ergänzend ist es aber auch möglich, dass man Schienenfahrzeuge verwendet, die individuell antreibbar sind und zusätzlich andere Schienenfahrzeuge verwendet, welche z.B. in Form eines Anhängers oder dergleichen von den individuell antreibbaren Schienenfahrzeugen mitgeschoben oder mitgezogen werden. Es ist z.B. möglich, dass zumindest einige der Schienenfahrzeuge, vorzugsweise jedes Schienenfahrzeug, einen eigenen Antrieb, vorzugsweise einen eigenen Antriebsmotor, aufweisen bzw. aufweist. Der eigene Antrieb des jeweiligen Schienenfahrzeugs kann einen eigenen nur dem Schienenfahrzeug zugeordneten Antriebsmotor umfassen. Eigene Antriebe pro Schienenfahrzeug müssen dies aber nicht zwingend vorsehen. So ist z.B. bei elektromagnetischen Linearmotoren, wie sie in magnetschwebebahnartigen Systemen eingesetzt werden, ein Teil des Antriebsmotors an den Schienen und Weichen der Schienenanordnung und nur ein anderer Teil des jeweiligen Motors am Schienenfahrzeug selbst angeordnet.

Auch wenn dies, wie bereits erläutert, nicht zwingend vorgesehen sein muss, so sehen bevorzugte Varianten der Erfindung doch vor, dass jedes Schienenfahrzeug zumindest ein Laufrad aufweist, mit dem es auf der Schienenanordnung verfahrbar gelagert ist. Insbesondere im Bereich von Stationen, bei denen zeitaufwendige Schritte bei der Herstellung der dünnwandigen Polymerprodukte realisiert werden, ist günstigerweise vorgesehen, dass die Schienenanordnung zumindest bereichsweise parallel zueinander angeordnete Schienen aufweist, welche von den Schienenfahrzeugen parallel zueinander befahrbar sind. Die in diesem Bereich parallel zueinander angeordneten Schienen können horizontal und/oder aber auch vertikal zueinander versetzt angeordnet sein und/oder über entsprechende Weichen mit der restlichen Schienenanordnung verbunden sein.

Um den jeweiligen Stationen möglichst einfach zugeführt bzw. in diesen möglichst optimal ausgerichtet werden zu können, sehen bevorzugte Varianten der Erfindung vor, dass die jeweilige Form an einem Schwenkarm des jeweiligen Schienenfahrzeugs angeordnet ist, wobei der Schwenkarm zusammen mit der Form motorisch angetrieben schwenkbar am Schienenfahrzeug angeordnet ist. Die Schwenkarme sind günstigerweise um zumindest 180° schwenkbar am Schienenfahrzeug angelenkt.

In erfindungsgemäßen Produktionsanlagen können auch beim Stand der Technik gegebenenfalls bereits vorhandene Formen weiter verwendet und entsprechend an den Schienenfahrzeugen, vorzugsweise deren Schwenkarmen, angebracht werden. Hierzu können soweit nötig an diesen Formen geeignete Adapter angebracht und/oder ausgebildet werden, mit denen die Formen dann am jeweiligen Schienenfahrzeug bzw. dessen Schwenkarmen angebracht werden können.

Günstig ist es auch, wenn die Form motorisch angetrieben, vorzugsweise mit unterschiedlichen Geschwindigkeiten, um eine Längsachse der Form drehbar am Schienenfahrzeug angeordnet ist. Alternativ kann zum Drehen der Formen auch die beim Stand der Technik an sich bekannte Technologie eingesetzt werden, bei der die Formen an einer Leitschiene oder dergleichen mittels Reibschluss oder dergleichen beim Vorbeifahren abrollen.

Bevorzugte Varianten sehen vor, dass die Form auf dem Schienenfahrzeug mittels einer Heizvorrichtung, vorzugsweise auf eine Temperatur im Intervall von 20° C bis 190° C, aufheizbar ist. Diese Heizvorrichtung ist günstigerweise in die Form integriert. Die Heizvorrichtung kann dabei in einem Innenraum der Form angeordnet sein, z.B. wenn die Form aus Keramik oder Kunststoff besteht, oder direkt an der jeweiligen Form selbst ausgebildet sein, z.B. wenn die Form aus einem Metall oder einer Metalllegierung wie z.B. einer Aluminium-Kupfer-Legierung besteht. Besonders bevorzugt befindet sie sich innerhalb der Form. Mittels der Heizvorrichtung kann die Form für gewisse Produktionsschritte vortemperiert werden. Mittels der Heizvorrichtung kann aber auch ein Trocknungsprozess des auf der Form abgelagerten Materials durchgeführt werden. Es ist sogar denkbar, auf die beim Stand der Technik an sich bekannten Öfen bzw. Trocknungsstationen zum Trocknen des auf der Form abgeschiedenen Polymermaterials zu verzichten, wenn mittels der Heizvorrichtung die Form auf entsprechende Temperatur gebracht wird.

Günstig ist es auch, wenn die Form mit einer elektrostatisch aufladbaren Oberfläche ausgestattet ist oder in anderen Worten eine elektrostatisch aufladbare Oberfläche aufweist. Dies kann insbesondere dann eingesetzt werden, wenn Materialien, insbesondere Polymere, elektrostatisch auf der Oberfläche der Form abgelagert werden sollen. Dies kann in verschiedensten Beschichtungsprozessen eingesetzt werden.

Zur Erhöhung der Flexibilität und auch Effektivität der Produktionsanlage sehen besonders bevorzugte Varianten der Erfindung vor, dass die Form jeweils mittels einer lösbaren Kupplungsvorrichtung am Schienenfahrzeug und insbesondere am Schwenkarm angeordnet ist. Hierdurch ist es z.B. in einfacher Art und Weise möglich, verschiedene Formen am jeweiligen Schienenfahrzeug austauschbar zu befestigen, kaputte oder wartungsbedürftige Formen auszutauschen und dergleichen. Es ist aber auch denkbar, die Formen an Stationen, die besonders viel Zeitaufwand und/oder Energieaufwand, z.B. für ein elektrostatisches Aufladen oder ein Beheizen, bei der Herstellung der Polymerprodukte benötigen, vom Schienenfahrzeug abzukoppeln, um sie dann nach Fertigstellung des Prozesses in dieser Station später mit dem Schienenfahrzeug wieder abzuholen und sie mit der lösbaren Kupplungsvorrichtung wieder anzukoppeln. Auch hierdurch können die Gesamteffektivität und Produktivität der Produktionsanlage deutlich gesteigert werden.

Wie eingangs bereits erläutert, kann die erfindungsgemäße Produktionsanlage unterschiedlichste Arten von Stationen aufweisen, welche bei der Herstellung des Polymerproduktes durchlaufen werden. Besonders bevorzugte Varianten sehen aber vor, dass die Station zur Ablagerung von Polymer auf den Formen eine Tauchstation zum Eintauchen der Formen in ein Polymerbad oder eine Sprühstation zum Aufsprühen von Polymer auf die Formen ist.

Die Schienenfahrzeuge sind günstigerweise chemikalienbeständig und auch temperaturbeständig bis zu 190° C ausgebildet. Auch eine hydrolysebeständige Ausbildung der Schienenfahrzeuge kann günstig sein. Bei den Formen kann es sich um Keramikformen aber auch um Kunststoffformen oder Formen aus Metall oder Metalllegierungen handeln. Natürlich sind grundsätzlich auch Formen aus Kombinationen dieser Materialien denkbar.

Bei der Erfindung ist vorgesehen, dass einzelne Stationen nicht mittels des gesamten Schienenfahrzeugs durchfahren werden, sondern die Schienenanordnung so neben der Station angeordnet ist, dass das Schienenfahrzeug neben der Station vorbeifährt und nur die an dem Schienenfahrzeug angeordnete Form oder die an dem Schienenfahrzeug angeordneten Formen in die Bearbeitungsstation hineingeführt werden.

Die Formen können mit unterschiedlichster Sensorik ausgestattet sein, um z.B. die Temperatur der Form, das Gewicht des auf der Form abgelagerten Materials, Feuchtigkeitsgehalte usw. zu überwachen und zu dokumentieren. An den Formen wie auch an den Schienenfahrzeugen können Datenspeicher oder andere elektronische Bauteile wie RFID und dergleichen angeordnet sein, um entsprechende Daten zur Form oder zum Schienenfahrzeug zu speichern und/oder unterschiedliche Formen voneinander unterscheiden zu können, usw. Die Schienenanordnung und auch die Ansteuerung der Schienenfahrzeuge kann so ausgebildet sein, dass verschiedene Stationen vom selben Schienenfahrzeug mehrfach durchlaufen werden.

Weitere Merkmale und Einzelheiten bevorzugter Ausgestaltungsformen der vorliegenden Erfindung werden nachfolgend anhand der Beschreibung der in den Figuren exemplarisch dargestellten Ausgestaltungsformen der Erfindung erläutert. Es zeigen:
- Fig. 1: eine schematisierte Draufsicht auf eine erste Variante einer Produktionsanlage;
- Fig. 2: eine ebenso schematisierte Draufsicht auf eine zweite Ausgestaltungsform einer Produktionsanlage;
- Fig. 3 und 4: Darstellungen zu einem Abschnitt der Schienenanordnung mit parallel zueinander geführten Schienen und einer Weiche;
- Fig. 5 bis 12: verschiedene Darstellungen zu einem ersten Ausführungsbeispiel eines Schienenfahrzeugs auf einer entsprechenden Schienenanordnung;
- Fig. 13 bis 15: ein zweites Ausführungsbeispiel eines Schienenfahrzeugs auf einer Schienenanordnung;
- Fig. 16 bis 18: Darstellungen zu einem Beispiel einer Form und
- Fig. 19 bis 22: beispielhafte Darstellungen zu verschiedenen Stationen, welche bei der Herstellung von dünnwandigen Polymerprodukten mittels einer erfindungsgemäßen Produktionsanlage durchlaufen werden können.

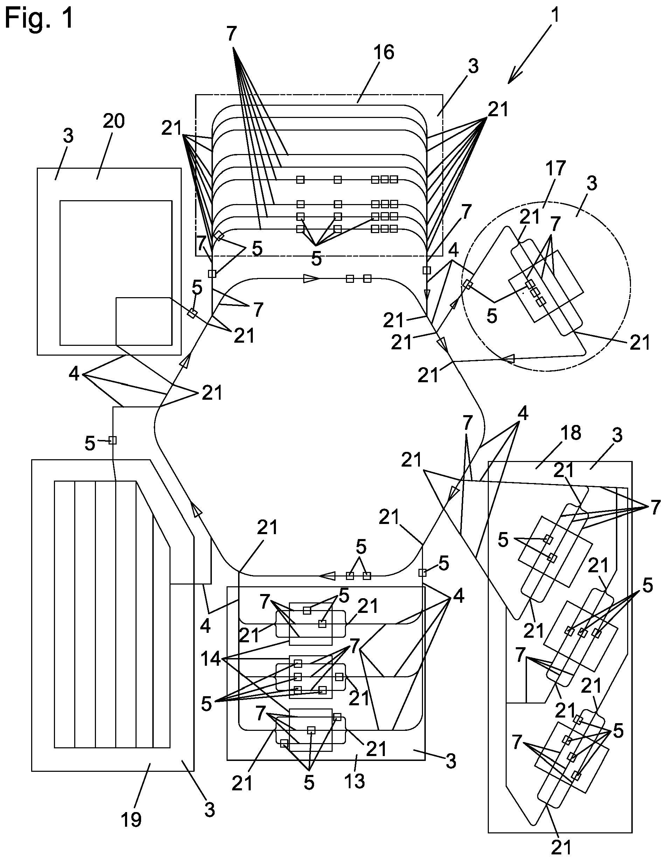

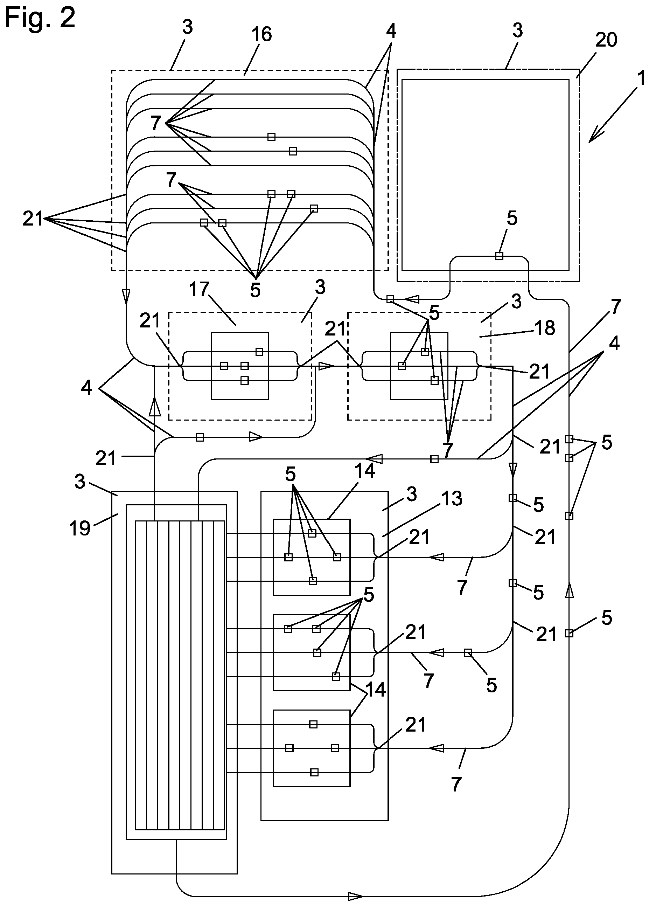

In den Fig. 1 und 2 sind in stark schematisierten Draufsichten jeweils Produktionsanlagen 1 zur Herstellung von, insbesondere dünnwandigen, Polymerprodukten, insbesondere von Handschuhen, gezeigt. Die Produktionsanlagen 1 weisen jeweils eine Transportvorrichtung zum Transport von Formen 2 und eine Vielzahl von Stationen 3 u.a. auch eine Station 3 zur Ablagerung von Polymer an den Formen 2 auf. Erfindungsgemäß weist die Transportvorrichtung eine Schienenanordnung 4 und eine Vielzahl von auf der Schienenanordnung 4 verfahrbaren Schienenfahrzeugen 5 auf, wobei auf den Schienenfahrzeugen 5 jeweils zumindest eine der Formen 2 angeordnet ist. In den Fig. 1 und 2 sind auf der Schienenanordnung 4 bzw. deren Schienen 7 jeweils nur beispielhaft einzelne Schienenfahrzeuge 5 eingezeichnet. In der stark schematisieren Darstellung gemäß der Fig. 1 und 2 sind die Formen 2 der Schienenfahrzeuge 5 noch nicht zu sehen. Die Anzahl und damit auch Dichte der Schienenfahrzeuge 5 auf der Schienenanordnung 4 können, wie eingangs bereits erläutert, sehr flexibel an die momentanen Produktionsbedürfnisse angepasst werden. Natürlich können die Schienenfahrzeuge 5 auch für unterschiedlich viele Formen 2 ausgelegt sein. Die Schienenanordnung 4 ist in der Regel aus einer Vielzahl von Schienen 7 aufgebaut, welche an ihren Kreuzungspunkten mittels Weichen 21 verbunden sind.

Grundsätzlich können die Schienenanordnungen 4 bzw. deren Schienen 7 und Weichen 21 wie auch die Schienenfahrzeuge 5 sehr unterschiedlich ausgebildet sein. Die Erfindung ist also keinesfalls auf die in den nachfolgenden Figuren beispielhaft gezeigten Ausführungsvarianten beschränkt.

Betrachtet man nun Fig. 1, so ist bereits auf den ersten Blick augenscheinlich, dass durch die Erfindung eine ganz andere, viel flexibler gestaltbare Anordnung der verschiedenen Stationen 3 der Produktionsanlage 1 möglich wird. Während beim Stand der Technik, bei dem eine Kette die Transportvorrichtung bildet, die Stationen mehr oder weniger zwangsweise aufeinander folgend also hintereinander angeordnet sein müssen, bietet die Erfindung ganz andere Möglichkeiten zur Anordnung der Stationen 3 relativ zueinander. In Fig. 1 ist ein Beispiel dargestellt, bei dem es einen zentralen umlaufend ausgebildeten Teilbereich der Schienenanordnung 4 gibt, über den alle Stationen 3 erreichbar sind. Die zu den einzelnen Stationen 3 führenden Schienen 7 der Schienenanordnung 4 münden durch entsprechende Weichen 21 in diesen zentralen Bereich der Schienenanordnung 4, auf dem die Schienenfahrzeuge 5 mit hoher Geschwindigkeit verfahren werden können. Jedes Schienenfahrzeug 5 kann individuell zu den entsprechenden Stationen 3 gefahren werden, sodass in der erfindungsgemäßen Produktionsanlage 1 gleichzeitig sogar unterschiedliche Prozesse zur Herstellung von unterschiedlichen Polymerprodukten gefahren werden können, wenn dies gewünscht ist. Die jeweiligen Formen 2 können durch ihre Anordnung an den jeweiligen Schienenfahrzeugen 5 individuell von einer Station 3 zur nächsten Station 3 gefahren werden können. Dabei können einzelne Stationen 3 auch mehrfach durchlaufen werden, sofern dies nötig ist. Wie eingangs bereits erläutert, ist günstigerweise vorgesehen, dass jedes Schienenfahrzeug 5 zum Verfahren entlang der Schienenanordnung 4 individuell antreibbar ist. Alternativ ist es aber natürlich auch denkbar, dass mehrere Schienenfahrzeuge 5 miteinander verbunden bzw. aneinandergekoppelt werden und so dann nur eines der Schienenfahrzeuge 5 dieser aneinander gekoppelten Gruppe von Schienenfahrzeugen 5 angetrieben werden muss. Abweichend von den hier gezeigten Varianten kann also auch eine Art Anhängersystem oder dergleichen realisiert werden.

Nachfolgend werden kurz die in dem Beispiel gemäß Fig. 1 dargestellten Stationen 3 erläutert. Es wird aber darauf hingewiesen, dass dies natürlich nur ein Beispiel ist und in erfindungsgemäßen Produktionsanlagen 1 unterschiedlichste Anzahlen und Arten von Stationen 3 sehr flexibel mittels der Schienenanordnung 4 miteinander verbunden werden können.

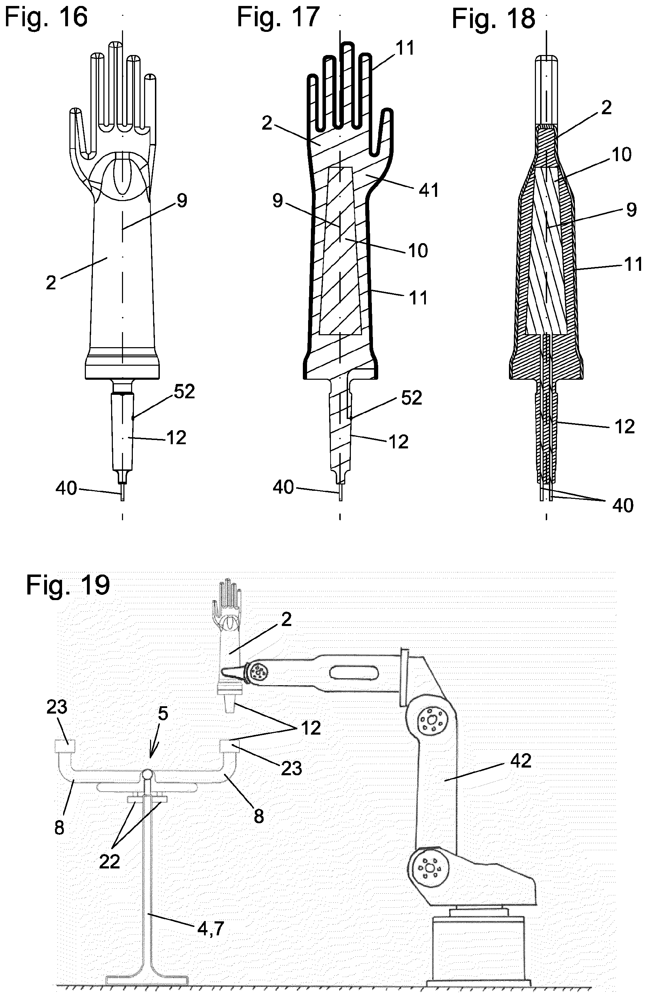

In Fig. 1 ist zunächst einmal eine Formhandlingstation 16 dargestellt. In dieser können die einzelnen Schienenfahrzeuge 5 mit unterschiedlichen Formen 2 bestückt werden. Die Formen 2 können aber auch zu Wartungszwecken oder zu Austauschzwecken von den jeweiligen Schienenfahrzeugen 5 abgenommen werden. An die Formhandlingstation 16 schließt günstigerweise ein Lager- und Managementsystem für die Formen 2 an, welches hier aber nicht explizit dargestellt ist. Das Bestücken der Schienenfahrzeuge 5 mit den Formen 2 wie auch das Abnehmen der Formen 2 von den Schienenfahrzeugen 5 in der Formhandlingstation 16 kann von Hand, aber vorzugsweise automatisiert, wie beispielhaft in Fig. 19 gezeigt und weiter unten noch erläutert, erfolgen. In der Formhandlingstation 16 weist die Schienenanordnung 4 in dem hier gezeigten Ausführungsbeispiel viele zueinander parallel angeordnete Schienen 7 auf, welche von den Schienenfahrzeugen 5 parallel zueinander befahrbar sind. Hierdurch können sehr viele Schienenfahrzeuge 5 gleichzeitig mit Formen 2 bestückt oder die Formen 2 von den Schienenfahrzeugen 5 abgenommen werden, was zu einer hohen Flexibilität und auch Produktivität der gesamten Produktionsanlage 1 beiträgt.

Die einzelnen, zueinander parallel verlaufenden Schienen 7 der Schienenanordnung 4 in der Formhandlingstation 16 sind über entsprechende Weichen 21 erreichbar. Die in die Formhandlingstation 16 hineinführenden und aus dieser herausführenden Schienen 7 sind über entsprechende Weichen 21 an den zentralen Bereich der Schienenanordnung 4 angebunden.

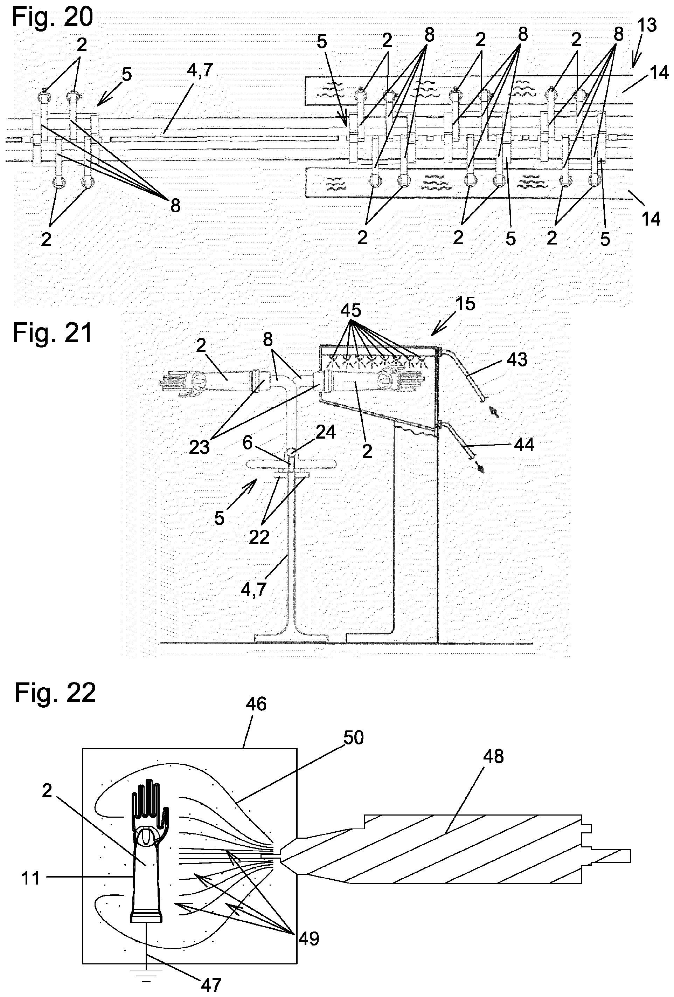

Im Uhrzeigersinn gesehen, folgt auf die Formhandlingstation 16 die Reinigungsstation 17, in der die an den Schienenfahrzeugen 5 befestigten Formen 2 zunächst einmal gereinigt werden. Auch hier ist die Schienenanordnung 4 innerhalb der Reinigungsstation 17 in mehrere, zueinander parallele Schienen 7 aufgefächert, sodass gleichzeitig möglichst viele, an verschiedenen Schienenfahrzeugen 5 angeordnete, Formen 2 dem Reinigungsprozess zugeführt werden können. Die Reinigung der Formen 7 kann mittels Tauchbädern, wie beispielhaft in Fig. 20 gezeigt, und/oder mittels Bürstenstationen und/oder Sprühstationen, wie in Fig. 21 gezeigt, erfolgen. Hierzu kann natürlich grundsätzlich auf jede beim Stand der Technik an sich bekannte Reinigungstechnologie zurückgegriffen werden.

Im Uhrzeigersinn gesehen, folgt auf die Reinigungsstation 17 in Fig. 1 die Haftvermittlerstation 18. In dieser wird auf die Formen 2 ein entsprechender Haftvermittler oder in anderen Worten Primer aufgebracht. Auch hier ist die Schienenanordnung wieder in zueinander parallele Schienen 7 aufgefächert, sodass wieder an möglichst vielen, an den jeweiligen Schienenfahrzeugen 5 angeordneten, Formen 2 gleichzeitig diesem Bearbeitungsschritt zugeführt werden können. Auch das Aufbringen der Haftvermittler kann durch Tauchbäder oder Sprühstationen erfolgen.

Im Uhrzeigersinn gesehen folgt dann auf die Haftvermittlerstation 18 eine Tauchstation 13 mit entsprechenden Polymerbädern 14, wie sie beispielhaft in Fig. 20 dargestellt sind. In dieser Tauchstation 13 werden im gezeigten Ausführungsbeispiel gemäß Fig. 1 die Formen 2 in die Polymerbäder 14 getaucht, sodass sich das Polymer auf den Formen 2 ablagern kann. Alternativ zur Tauchstation 13 könnte das entsprechende Polymer 3 in einer entsprechenden Sprühstation 15 oder mittels eines elektrostatisch aufgeladenen Sprühorgans 48, wie in Fig. 22 gezeigt, auf die Formen 2 aufgebracht werden. Auch in dieser Tauchstation 13 ist es günstig, die Schienenanordnung 4 in eine Vielzahl von parallelen Schienen 7 aufzufächern, um so die Produktionsanlage 1 weiter zu effektivieren.

Zum Trocknen des auf die Formen 2 aufgebrachten Polymers ist im gezeigten Ausführungsbeispiel gemäß Fig. 1 dann eine Trocknungsstation 19 vorgesehen. Diese kann z.B. in Form eines entsprechenden Ofens oder dergleichen ausgeführt sein. Die Formen 2 können hier auf den Schienenfahrzeugen 5 entsprechend durch die Trocknungsstation 19 hindurchgefahren werden. Genauso gut ist es aber auch möglich, die Formen 2, wie anhand von Fig. 19 beispielhaft gezeigt, von den Schienenfahrzeugen 5 abzunehmen, in die Trocknungsstation 19 zu übergeben und nach erfolgtem Trocknungsprozess mit den Schienenfahrzeugen 5 wieder entsprechend abzuholen. Alternativ zur Trocknungsstation 19 ist es auch möglich, die Formen 2 selbst, wie weiter hinten anhand der Fig. 16 bis 18 erläutert, so zu beheizen, dass das Polymer auf den Formen 2 ohne eine separate Trocknungsstation trocknen kann.

In Fig. 1 erfolgt dann noch die an sich bekannte Abziehstation 20, in der die fertigen Polymerprodukte, insbesondere Handschuhe, in an sich bekannter Art und Weise von den Formen 2 abgezogen und dann gegebenenfalls einer Qualitätskontrolle mit anschließender Verpackung oder dergleichen zugeführt werden.

Fig. 2 zeigt ein anderes Beispiel, wie die einzelnen Stationen 3 einer Produktionsanlage 1 unter erfindungsgemäßer Verwendung der Schienenanordnung 4 und der Schienenfahrzeuge 5 angeordnet werden können. Auch hier sind eine Formhandlingstation 16, eine Reinigungsstation 17, eine Haftvermittlerstation 18, eine Tauchstation 13, eine Trocknungsstation 19 und eine Abziehstation 20 vorhanden. Zu den einzelnen Stationen 3 gilt das zum ersten Ausführungsbeispiel gemäß Fig.1 Gesagte. Es ist aber nochmals darauf hinzuweisen, dass sowohl Fig. 1 als auch Fig. 2 nur ausgewählte Beispiele zeigen, wie erfindungsgemäße Produktionsanlagen 1 realisiert werden können. Je nach herzustellendem Produkt können die einzelnen Stationen 3 auch mehrfach vorhanden sein. Genauso gut können mehr oder weniger und auch andere Arten von Stationen 3 in eine erfindungsgemäße Produktionsanlage 1 integriert werden.

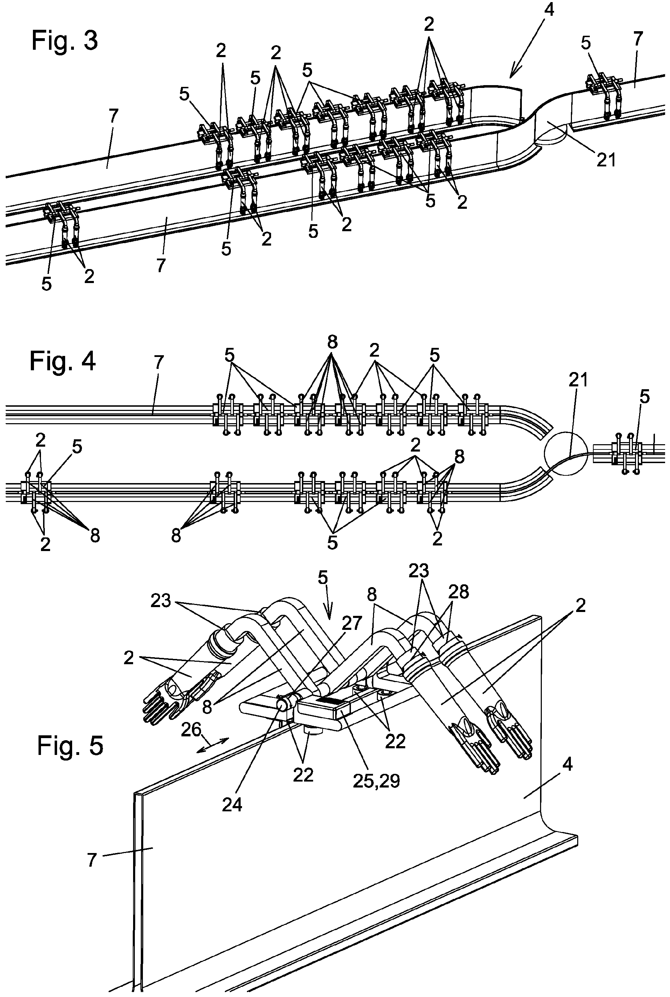

Die Fig. 3 und 4 zeigen beispielhaft einen Abschnitt einer Schienenanordnung 4, bei dem zwei Schienen 7 zueinander parallel angeordnet und mittels einer Weiche 21 verbunden sind. In diesem Ausführungsbeispiel ist jedes Schienenfahrzeug 5 zum Verfahren entlang der Schienenanordnung 4 individuell antreibbar. Die Schienenfahrzeuge 5 sind zumindest bereichsweise hintereinander auf der Schienenanordnung 4 angeordnet. In Fig. 3 und 4 ist gut zu sehen, dass es Betriebszustände gibt, in denen die Abstände zwischen den aufeinanderfolgenden Schienenfahrzeugen 5 so groß sind, dass die Schienenfahrzeuge 5 zwischen dem davor und dem dahinter angeordneten Schienenfahrzeug 5 unabhängig von der Geschwindigkeit des davor und des dahinter angeordneten Schienenfahrzeugs 5 auf der Schienenanordnung 4 verfahrbar sind. Sind die Schienenfahrzeuge 5 hingegen so nah aufeinander aufgefahren, wie dies in den Fig. 3 und 4 zum Teil auch dargestellt ist, dann werden sie eben entsprechend mit derselben Geschwindigkeit weiterverfahren. Durch die individuelle Antreibbarkeit der einzelnen Schienenfahrzeuge 5 ist hier eine große Flexibilität gegeben. Die Dichte und auch die Geschwindigkeit der Schienenfahrzeuge 5 auf der Schienenanordnung 4 können lokal jeweils an die notwendigen Bedürfnisse sehr flexibel angepasst werden.

In den hier gezeigten Ausführungsbeispielen weist jedes Schienenfahrzeug 5 vier Formen 2 auf. Jede Form 2 ist über einen Schwenkarm 8 schwenkbar am jeweiligen Schienenfahrzeug 5 angeordnet. Zum Verschwenken der Schwenkarme 8 samt Formen 2 in den in Fig. 5 eingezeichneten Schwenkrichtungen 27 sind im gezeigten Ausführungsbeispiel zwei z.B. in Form von Elektromotoren gegebenenfalls mit entsprechenden Getrieben ausgebildete Schwenkantriebe 24 vorgesehen. Einer dieser Schwenkantriebe 24 verschwenkt dabei die Schwenkarme 8 auf der rechten Seite des Schienenfahrzeugs 5. Der andere der Schwenkarme 24 verschwenkt die auf der linken Seite des Schienenfahrzeugs 5 angeordneten Schwenkarme 8. Natürlich sind hier auch andere Lösungen denkbar. Zusätzlich sind in den hier gezeigten Ausführungsbeispielen die Formen 2 motorisch angetrieben, um eine Längsachse 9, siehe Fig. 16 bis 18, in den Drehrichtungen 28 drehbar am Schienenfahrzeug 5 angeordnet. Der hierzu verwendete Drehantrieb 23 befindet sich bei den gezeigten Ausführungsbeispielen jeweils am Schwenkarm 8. Auch hier können z.B. Elektromotoren oder dergleichen zum Einsatz kommen. Alternativ kann zum Drehen der Formen 2, wie weiter vorn bereits ausgeführt, auch die beim Stand der Technik an sich bekannte Technologie eingesetzt werden, bei der die Formen 2 an einer Leitschiene oder dergleichen mittels Reibschluss oder dergleichen beim Vorbeifahren abrollen.

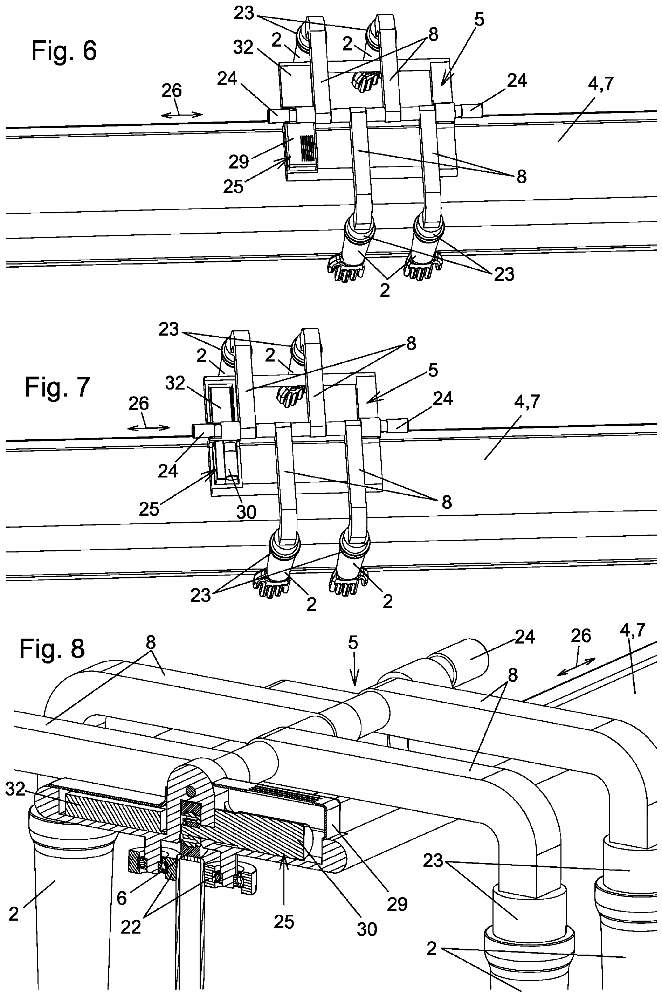

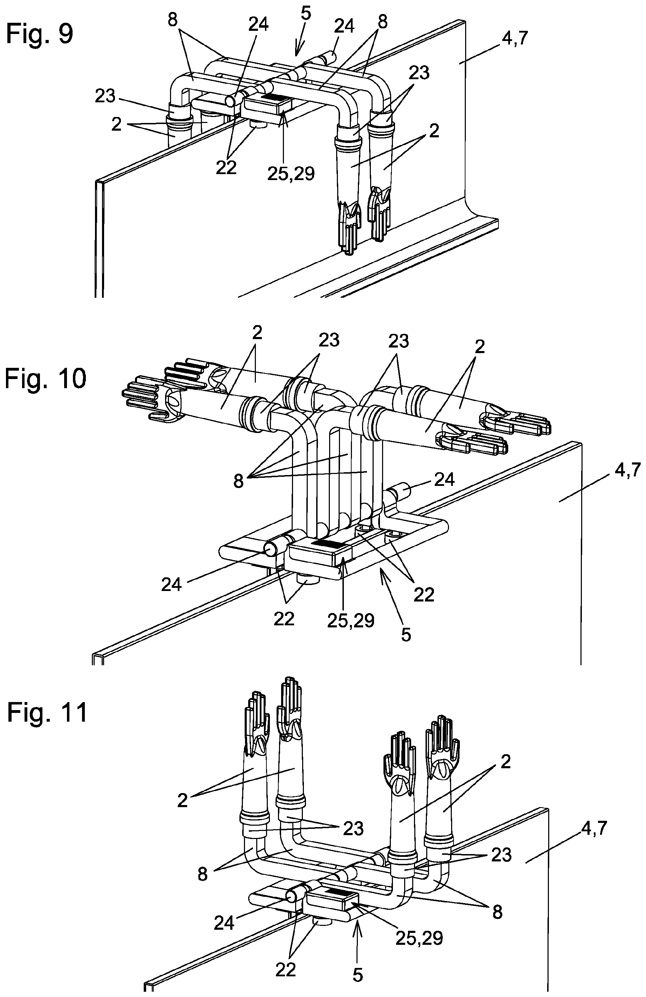

Es handelt sich bei den hier gezeigten Schienenfahrzeugen 5 um solche, die entsprechend individuell antreibbar sind. In dem ersten Ausführungsbeispiel gemäß der Fig. 5 bis 12 ist hierfür vorgesehen, dass jedes Schienenfahrzeug 5 einen eigenen Antriebsmotor aufweist. Es handelt sich hierbei um den Motor 30, welcher unter der Abdeckung 29 verborgen ist. Mit dem Motor 30 des Fahrantriebs 25 wird ein in Fig. 8 besonders gut sichtbares Laufrad 6 angetrieben, welches auf der Schiene 7 der Schienenanordnung 4 abrollt und so für den nötigen Antrieb zum Verfahren des Schienenfahrzeuges 5 in den Fahrrichtungen 26 sorgt. Zusätzlich ist das Schienenfahrzeug 5 noch mittels Führungsrollen 22 auf der jeweiligen Schiene 7 der Schienenanordnung 4 geführt. Zur Energieversorgung des Schienenfahrzeugs 5 und insbesondere seiner Antriebe und seiner Steuerung 32 ist in dem hier gezeigten Ausführungsbeispiel unter der Abdeckung 29 ein wiederaufladbarer Akkumulator 31 vorgesehen. Natürlich könnten zur Energieversorgung der Schienenfahrzeuge 5 aber auch entsprechende Stromversorgungsleitungen an den Schienen 7 realisiert werden, wobei dann die Schienenfahrzeuge 5 jeweils mittels eines entsprechenden Abgriffs bzw. Schleifkontakts mit diesen Stromversorgungsleitungen in Verbindung stehen. Mittels der Steuerung 32 werden günstigerweise alle Antriebe des Schienenfahrzeugs 5 angesteuert.

Anhand der Fig. 5, 9, 10 und 11 ist beispielhaft gezeigt, dass die Schwenkarme 8 mit den Formen 2 günstigerweise um zumindest 180° verschwenkbar an den Schienenfahrzeugen 5 angeordnet sind. Hierdurch können die Formen 2 je nach Bedarf der jeweiligen Station 3 optimal für den jeweiligen Bearbeitungsschritt ausgerichtet werden.

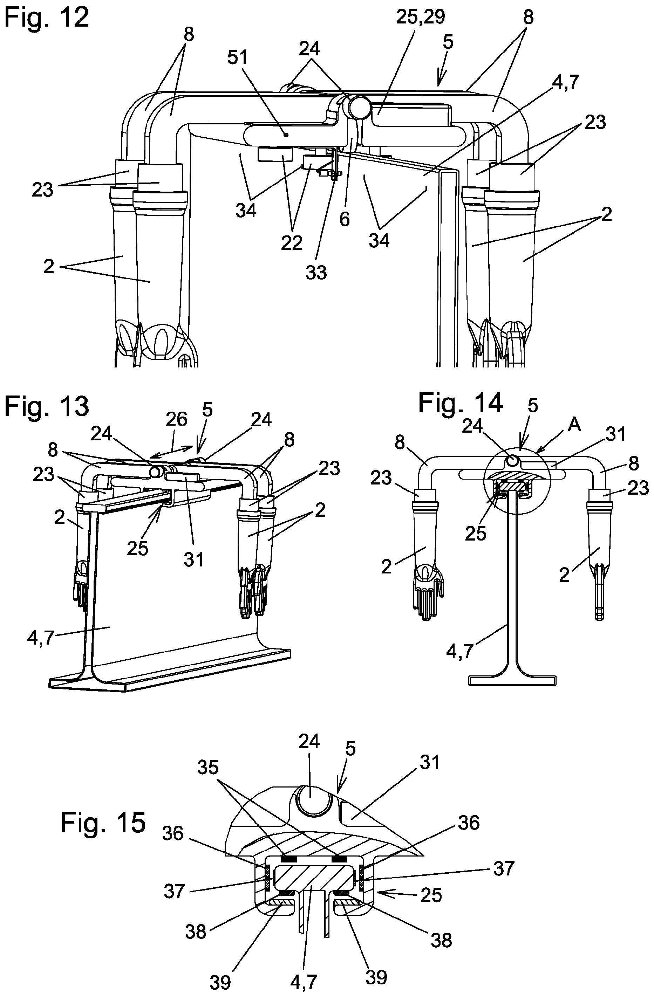

Anhand Fig. 12 wird nur beispielhaft die Sensorik erläutert, welche zur Ansteuerung des Schienenfahrzeugs zum Einsatz kommen kann, insbesondere um das Verfahren der jeweiligen Schienenfahrzeugs 5 auf der Schienenanordnung 4 in den Verfahrrichtungen 26 mittels der Steuerung 32 zu steuern. Auch die nachfolgend hierzu erläuterten Varianten sind natürlich nur Beispiele. Grundsätzlich können alle geeigneten Arten, der beim Stand der Technik für Schienenfahrzeuge bzw. Shuttles bekannten Steuerungsmethoden hier angewendet werden.

Im gezeigten Ausführungsbeispiel weist jedes Schienenfahrzeug 5 eine Geschwindigkeits- und Positionssensorik auf, mit der es sowohl seine Position auf der Schienenanordnung 4 als auch die in diesem Bereich Maximalgeschwindigkeit abfragen und auch seine momentane Ist-Geschwindigkeit messen kann. Es kann sich z.B. um ein magnetkodiertes Wegmesssystem handeln. Im gezeigten Ausführungsbeispiel sind hierzu an den Schienen 7 der Schienenanordnung 4 Markerpunkte 34 äquidistant zueinander angeordnet. Am Schienenfahrzeug 5 befindet sich ein erster Sensor 33, mit dem das Vorbeifahren des Schienenfahrzeugs 5 am jeweiligen Markerpunkt 34 detektiert und auch noch sonstige Informationen aus dem Markerpunkt 34 ausgelesen werden können. So kann mittels der Markerpunkte 34 und dem ersten Sensor 33 die momentane Ist-Geschwindigkeit des Schienenfahrzeugs 5 bestimmt werden. Eine entsprechende Kodierung der Markerpunkte 34 lässt zusätzlich auch eine Positionsbestimmung des Schienenfahrzeugs 5 auf der Schienenanordnung 4 zu. Über eine entsprechende Kodierung der Markerpunkte 34 kann auch eine Sollgeschwindigkeit oder lokale Maximalgeschwindigkeit mittels des ersten Sensors 33 ausgelesen und an die Steuerung 32 weitergegeben werden. Auch Befehle zum Schwenken und/oder Drehen der Formen 2 können aus den Markerpunkten 34 auslesbar sein.

Um den Abstand zu dem davor und gegebenenfalls auch dahinter angeordneten Schienenfahrzeug 5 bestimmen und überwachen zu können, sind am Schienenfahrzeug 5, wie in Fig. 12 dargestellt, zusätzlich zweite Sensoren 51 vorgesehen. Mit diesen kann der Abstand zu dem davor fahrenden und gegebenenfalls auch zu dem dahinter kommenden Schienenfahrzeug 5 bestimmt werden. Es kann sich z.B. um an sich bekannte Ultraschallsensoren oder optoelektrische Abstandssensoren handeln. Auch diese Abstandsinformationen werden an die Steuerung 32 weitergeleitet, sodass diese abhängig von der Position des Schienenfahrzeugs 5 auf der Schienenanordnung 4 und den Abständen zu den davor und dahinter fahrenden Schienenfahrzeugen 5 jeweils optimale Geschwindigkeitsvorgaben für den Fahrantrieb 25 bestimmen kann, um so den Fahrantrieb 25 anzusteuern.

Abweichend von dem hier in Fig. 12 gezeigten Ausführungsbeispiel kann eine entsprechende Regelung und Steuerung des Schienenfahrzeugs 5 natürlich aber auch in anderen, an sich bekannten Arten und Weisen realisiert werden. Z.B. können hierzu auch transducerbasierte Systeme zum Einsatz kommen, wie sie beim Stand der Technik an sich bekannt sind. Alternativ wäre es auch denkbar, über entsprechende Positionierbestimmungssysteme die Positionen der einzelnen Schienenfahrzeuge 5 auf der Schienenanordnung 4 individuell zu bestimmen, um dann in einer zentralen Steuerungseinheit entsprechende Steuerbefehle für die einzelnen Schienenfahrzeuge 5 zu erstellen, um die Schienenfahrzeuge 5 dann in Abhängigkeit ihrer jeweiligen Position anzusteuern. Anstelle oder zusätzlich zu einer zentralen Steuerungseinheit können auch die Steuerungen 32 der Schienenfahrzeuge 5 miteinander kommunizieren.

All dies bezüglich der Ansteuerung und der Stromversorgung der Schienenfahrzeuge 5 Gesagte gilt auch für das nachfolgende Ausführungsbeispiel eines anderen Schienenfahrzeugs 5 gemäß der Fig. 13 bis 15, ohne dass die entsprechende Sensorik in den Fig. 13 bis 15 noch einmal eingezeichnet ist.

Während das erste Ausführungsbeispiel eines Schienenfahrzeugs 5 gemäß der Fig. 5 bis 12 jeweils Laufräder 6 aufweist, mit dem es auf der Schienenanordnung 4 verfahrbar gelagert ist, handelt es sich bei dem Fahrantrieb 25 des Ausführungsbeispiels des Schienenfahrzeugs 5 gemäß der Fig. 13 bis 15 um einen elektromagnetischen Linearmotor, also um eine Art Magnetschwebebahn. Wie für die Magnetschwebetechnologie an sich bekannt, wird der Linearmotor aus einer an den Schienen 7 der Schienenanordnung 4 angebrachten Abfolgen von Statoren 38 und an den Schienenfahrzeugen 5 angeordneten Läufern 39 gebildet. Bei den Läufern 39 kann es sich, wie an sich bekannt, um entsprechend ansteuerbare Elektromagnete handeln. Die Statoren 38 können als Permanent- aber auch als Elektromagnete ausgeführt sein. Die Funktionsweise solcher Linearmotoren ist an sich bekannt. Die Schienenfahrzeuge 5 sind mit einem solchen Fahrantrieb 25 jeweils in beiden Fahrrichtungen 26 individuell verfahrbar. Das Zusammenwirken von Stator 38 und Läufer 39 sorgt auch für ein gewisses Anheben des Schienenfahrzeugs 5 auf der Schiene 7, sodass die am Schienenfahrzeug 5 über der Schiene 7 angeordneten Gleit- und Absetzkufen 35 nur beim Stillstand bzw. beim Anfahren und Abbremsen des Schienenfahrzeugs 5 mit der Schiene 7 in Kontakt kommen. Die seitlich neben der Schiene 7 am Schienenfahrzeug 5 angeordneten Führungsmagnete 36 sorgen in Zusammenwirkung mit den Führungsschienen 37 für eine entsprechende seitliche Führung des Schienenfahrzeugs 5 auf der Schiene 7. Insgesamt wird so über diese Art des Fahrantriebs 25 ein praktisch reibungsfreies Verfahren des Schienenfahrzeugs 5 in den Fahrrichtungen 26 auf der Schienenanordnung 4 ermöglicht.

Auch wenn hier zwei konkrete Varianten eines entsprechenden Fahrantriebs 25 für Schienenfahrzeuge 5 gezeigt sind, ist dennoch darauf hinzuweisen, dass natürlich letztendlich alle für Schienenfahrzeuge 5 an sich bekannten Arten des Antriebs bei erfindungsgemäßen Produktionsanlagen 1 eingesetzt werden können, wenn diese Antriebe für diese Anwendungen entsprechend geeignet sind.

Fig. 16, 17 und 18 zeigen nun beispielhaft eine Form 2, welche zu einer Herstellung eines Handschuhs vorgesehen ist. Es handelt sich hier um eine Form 2, welche sowohl eine Heizvorrichtung 10 als auch eine elektrostatisch aufladbare Oberfläche 11 aufweist. Wie insbesondere in den Schnittdarstellungen zu Fig. 17 und 18 zu sehen ist, befindet sich die hier nur schematisch dargestellte Heizvorrichtung 10 im Inneren des Kerns 41 der Form 2. Es handelt sich bevorzugt um eine an sich bekannte elektrische Heizvorrichtung 10, die über die Anschlüsse 40 vom Schienenfahrzeug 5 aus mit elektrischem Strom versorgt werden kann. Wie bereits erläutert, kann aber die Heizvorrichtung 10 auch in anderer Art, z.B. direkt in die Form 2 integriert sein. Außen am Kern 41 befindet sich die elektrostatisch aufladbare Oberfläche 11 aus einem entsprechend elektrostatisch aufladbaren Material.

Über einen Anschluss 52 ist die Oberfläche 11 elektrostatisch aufladbar mit dem Energieversorgungssystem des Schienenfahrzeugs 5 verbindbar. Die Längsachse 9, um die die Form 2, wenn sie am Schienenfahrzeug 5 entsprechend montiert ist, mittels des Drehantriebs 23 in den Drehrichtungen 28 gedreht werden kann, ist in allen drei Fig. 16, 17 und 18 eingezeichnet.

Am unteren Ende der Form 2 befindet sich das Teil der Kupplungsvorrichtung 12 der Form 2, mit dem die Form 2 lösbar am Schienenfahrzeug 5 befestigt werden kann. In dem hier gezeigten Ausführungsbeispiel handelt es sich dabei um einen aus der Form 2 unten herausstehenden Klemmkonus, welcher in einer entsprechenden, am Schwenkarm 8 angeordneten, hier nicht weiter dargestellten, Klemmvorrichtung lösbar festgeklemmt werden kann. Es sind natürlich aber unterschiedlichste Kupplungsvorrichtungen 12 denkbar, um die Form 2 auswechselbar bzw. lösbar am Schienenfahrzeug 5 zu befestigen. Der Kern 41 der Form kann aus Kunststoff, Keramik, Metall, Metalllegierung und/oder Kombinationen daraus oder auch aus anderen geeigneten Materialien bestehen.

Wie eingangs bereits erläutert, können, z.B. aus alten Produktionsanlagen gemäß Stand der Technik, bereits vorhandene Formen auch so umgerüstet oder nachgerüstet werden, dass sie an den Schienenfahrzeugen 5 bzw. deren Schwenkarmen 8 erfindungsgemäßer Produktionsanlagen 1 befestigt werden können, indem entsprechende Adapter, hier z.B. eben das entsprechende Teil der Kupplungsvorrichtung 12, an der Form 2 ausgebildet oder angeordnet wird.

Fig. 19 zeigt nun schematisiert, wie die Formen 2 nach entsprechendem Lösen der Kupplungsvorrichtung 12 mittels eines an sich bekannten Handlingroboters 42 vom Schienenfahrzeug 5 bzw. dessen Schwenkarm 8 abgenommen und entsprechend in umgekehrter Weise dort auch wieder befestigt werden können. Solche Handlingroboter 42 können z.B. in der eingangs genannten Formhandlingstation 16 eingesetzt werden. Sie können aber auch überall dort zum Einsatz kommen, wo die Formen 2 vom Schienenfahrzeug 5 abgenommen und in eine entsprechende Station 3 übergeben werden. Andersherum können solche Handlingroboter 42 auch dort zum Einsatz kommen, wo die Formen 2 aus einer Station 3 entnommen und wieder am Schienenfahrzeug 5 befestigt werden.

Fig. 20 zeigt beispielhaft eine Tauchstation 13, bei der die Formen 2 in Polymerbäder 14 eingetaucht werden. Es handelt sich also um eine Station 3 zur Ablagerung von Polymer an den Formen 2. Solche Tauchstationen 13 sind abgesehen von der erfindungsgemäßen Schienenanordnung 4 an sich bekannt. Bei den Tauchbecken muss es sich natürlich nicht zwangsweise um Polymerbäder 14 handeln. In Reinigungsstationen 17 können entsprechende Tauchbecken z.B. auch mit einer entsprechenden Reinigungsflüssigkeit gefüllt sein. Entsprechende Tauchbecken können natürlich auch in Haftvermittlerstationen 18 und dergleichen zum Einsatz kommen.

Fig. 21 zeigt beispielhaft eine Sprühstation 15, welche wiederum als eine Station 3 zur Ablagerung von Polymer an den Formen 2 ausgebildet sein kann. Genauso gut können solche Sprühstationen 15 aber auch mit einem entsprechenden Reinigungsfluid betrieben werden, um so eine Reinigungsstation 17 zu bilden. Alternativ ist es auch denkbar, auf diese Art und Weise Haftvermittler auf die Form 2 aufzubringen, womit dann die Sprühstation 15 als Haftvermittlerstation 18 ausgeführt ist. In Fig. 21 ist jedenfalls gezeigt, dass die Sprühstation 15 eine Vielzahl von Sprühdüsen 45 aufweist, welche mittels des Zulaufs 43 mit dem entsprechenden Fluid beaufschlagt werden. Das übrige, nicht auf der Form 2 abgelagerte Fluid kann dann über den Ablauf 44 wieder entnommen, gegebenenfalls gereinigt und über den Zulauf 43 auch wieder zugeführt werden.

Fig. 22 zeigt eine Beschichtungskammer 46 mit einem entsprechenden Sprühorgan 48, welche elektrostatisch aufgeladene Partikel 49 in die Beschichtungskammer 46 sprüht. Schematisiert ist hier auch das so erzeugte elektrische Feld 50 dargestellt. Die elektrostatisch aufgeladenen Partikel 49 lagern sich in der Beschichtungskammer 46 an der Oberfläche 11 der Form 2 ab. Die Oberfläche 11 kann über die Erdung 47 elektrisch geerdet, aber alternativ auch gezielt elektrostatisch aufgeladen sein, um so den Ablagerungsprozess der elektrisch aufgeladenen Partikel 49 zu fördern. Solche Beschichtungskammern 46 mit Sprühorganen 48 können sowohl als Station 3 zur Ablagerung von Polymer an den Formen 2 als auch als Haftvermittlerstation 18 eingesetzt werden. Für das Besprühen bzw. Beschichten der Formen 2 in der Beschichtungskammer 46 können die Formen 2 auch von den Schienenfahrzeugen 5 abgenommen werden, um nach Abschluss dieses Prozesses dann wieder von den Schienenfahrzeugen 5 abgeholt zu werden. Die elektrostatische Aufladung der Oberfläche 11 kann unabhängig vom Schienenfahrzeug 5 dann auch durch entsprechende Anschlüsse in der Beschichtungskammer 46 erfolgen.

### Legende zu den Hinweisziffern:

| | | | |
|---|---|---|---|
| 1 | Produktionsanlage | 30 | Motor |
| 2 | Form | 31 | Akkumulator |
| 3 | Station | 32 | Steuerung |
| 4 | Schienenanordnung | 33 | erster Sensor |
| 5 | Schienenfahrzeug | 34 | Markerpunkt |
| 6 | Laufrad | 35 | Gleit- und Absetzkufe |
| 7 | Schiene | 36 | Führungsmagnet |
| 8 | Schwenkarm | 37 | Führungsschiene |
| 9 | Längsachse | 38 | Stator |
| 10 | Heizvorrichtung | 39 | Läufer |
| 11 | Oberfläche | 40 | Anschluss |
| 12 | Kupplungsvorrichtung | 41 | Kern |
| 13 | Tauchstation | 42 | Handlingroboter |
| 14 | Polymerbad | 43 | Zulauf |
| 15 | Sprühstation | 44 | Ablauf |
| 16 | Formhandlingstation | 45 | Sprühdüse |
| 17 | Reinigungsstation | 46 | Beschichtungskammer |
| 18 | Haftvermittlerstation | 47 | Erdung |
| 19 | Trocknungsstation | 48 | Sprühorgan |
| 20 | Abziehstation | 49 | geladene Pulverpartikel |
| 21 | Weiche | 50 | elektrostatisches Feld |
| 22 | Führungsrolle | 51 | zweiter Sensor |
| 23 | Drehantrieb | 52 | Anschluss |
| 24 | Schwenkantrieb | | |
| 25 | Fahrantrieb | | |
| 26 | Fahrrichtungen | | |
| 27 | Schwenkrichtungen | | |
| 28 | Drehrichtungen | | |
| 29 | Abdeckung | | |

## Patentansprüche

1. Produktionsanlage (1) zur Herstellung von Polymerprodukten, insbesondere von Handschuhen, wobei die Produktionsanlage (1) eine Transportvorrichtung zum Transport von Formen (2) und mehrere voneinander verschiedene Stationen (3) zur Durchführung von verschiedenen Bearbeitungsprozessen bei der Herstellung der Polymerprodukte aufweist, wobei zumindest eine der Stationen (3) eine Station (3) zur Ablagerung von Polymer an den Formen (2) ist, wobei die Transportvorrichtung eine Schienenanordnung (4) und eine Vielzahl von auf der Schienenanordnung (4) verfahrbaren Schienenfahrzeugen (5) aufweist, wobei auf den Schienenfahrzeugen (5) jeweils zumindest eine der Formen (2) angeordnet ist, **dadurch gekennzeichnet, dass** die Schienenanordnung (4) so neben zumindest einer der Stationen (3) angeordnet ist, dass das jeweilige Schienenfahrzeug (5) neben dieser Station (3) vorbeifährt und nur die an dem jeweiligen Schienenfahrzeug (5) angeordnete Form (2) oder die an dem jeweiligen Schienenfahrzeug (5) angeordneten Formen (2) in diese Station (3) hineingeführt werden.

2. Produktionsanlage (1) nach Anspruch 1, **dadurch gekennzeichnet, dass** die Schienenfahrzeuge (5) zumindest bereichsweise hintereinander auf der Schienenanordnung (4) angeordnet sind, wobei es Betriebszustände gibt, in denen zumindest eines der Schienenfahrzeuge (5) zwischen dem davor und dem dahinter angeordneten Schienenfahrzeug (5) unabhängig von der Geschwindigkeit des davor und des dahinter angeordneten Schienenfahrzeugs (5) auf der Schienenanordnung (4) verfahrbar ist.

3. Produktionsanlage (1) nach Anspruch 1 oder 2, **dadurch gekennzeichnet, dass** zumindest einige der Schienenfahrzeuge (5), vorzugsweise jedes Schienenfahrzeug (5), zum Verfahren entlang der Schienenanordnung (4) individuell antreibbar sind bzw. ist.

4. Produktionsanlage (1) nach einem der Ansprüche 1 bis 3, **dadurch gekennzeichnet, dass** zumindest einige der Schienenfahrzeuge (5), vorzugsweise jedes Schienenfahrzeug (5), einen eigenen Antrieb, vorzugsweise einen eigenen Antriebsmotor, aufweisen bzw. aufweist.

5. Produktionsanlage (1) nach einem der Ansprüche 1 bis 4, **dadurch gekennzeichnet, dass** jedes Schienenfahrzeug (5) zumindest ein Laufrad (6) aufweist, mit dem es auf der Schienenanordnung (4) verfahrbar gelagert ist.

6. Produktionsanlage (1) nach einem der Ansprüche 1 bis 5, **dadurch gekennzeichnet, dass** die Schienenanordnung (4) zumindest bereichsweise parallel zueinander angeordnete Schienen (7) aufweist, welche von den Schienenfahrzeugen (5) parallel zueinander befahrbar sind.

7. Produktionsanlage (1) nach einem der Ansprüche 1 bis 6, **dadurch gekennzeichnet, dass** die jeweilige Form (2) an einem Schwenkarm (8) des jeweiligen Schienenfahrzeugs (5) angeordnet ist, wobei der Schwenkarm (8) zusammen mit der Form (2) motorisch angetrieben schwenkbar am Schienenfahrzeug (5) angeordnet ist und/oder dass die Form (2) motorisch angetrieben um eine Längsachse (9) der Form (2) drehbar am Schienenfahrzeug (5) angeordnet ist.

8. Produktionsanlage (1) nach einem der Ansprüche 1 bis 7, **dadurch gekennzeichnet, dass** die Form (2) auf dem Schienenfahrzeug (5) mittels einer Heizvorrichtung (10), vorzugsweise auf eine Temperatur im Intervall von 20°C bis 190°C, aufheizbar und/oder eine elektrostatisch aufladbare Oberfläche (11) aufweist.

9. Produktionsanlage (1) nach einem der Ansprüche 1 bis 8, **dadurch gekennzeichnet, dass** die Form (2) mittels einer lösbaren Kupplungsvorrichtung (12) am Schienenfahrzeug (5) befestigt oder befestigbar ist.

10. Produktionsanlage (1) nach einem der Ansprüche 1 bis 9, **dadurch gekennzeichnet, dass** die Station (3) zur Ablagerung von Polymer auf den Formen (2) eine Tauchstation (13) zum Eintauchen der Formen (2) in ein Polymerbad (14) oder eine Sprühstation (15) zum Aufsprühen von Polymer auf die Formen (2) ist.

## Claims

1. Production plant (1) for producing polymer products, in particular gloves, wherein the production plant (1) comprises a transport device for transporting molds (2), and a plurality of different stations (3) for performing various processing processes during production of the polymer products, wherein at least one of the stations (3) is a station (3) for depositing polymer on the molds (2), wherein the transport device comprises a rail arrangement (4) and a plurality of rail vehicles (5) movable on the rail arrangement (4), wherein at least one of the molds (2) is arranged on each of the rail vehicles (5), **characterized in that** the rail arrangement (4) is arranged alongside at least one of the stations (3) such that the respective rail vehicle (5) passes by this station (3) and only the mold (2) arranged on the respective rail vehicle (5) or the molds (2) arranged on the respective rail vehicle (5) are introduced into this station (3).

2. Production plant (1) according to claim 1, **characterized in that**, at least in some regions, the rail vehicles (5) are arranged one behind the other on the rail arrangement (4), wherein there are operating states in which at least one of the rail vehicles (5) is movable on the rail arrangement (4) between the rail vehicle (5) arranged ahead of it and the rail vehicle arranged behind it, regardless of the speed of the rail vehicle (5) arranged ahead of it and the rail vehicle arranged behind it.

3. Production plant (1) according to claim 1 or 2, **characterized in that** at least some of the rail vehicles (5), preferably every rail vehicle (5), is or are individually drivable for movement along the rail arrangement (4).

4. Production plant (1) according to any of claims 1 to 3, **characterized in that** at least some of the rail vehicles (5), preferably every rail vehicle (5), has or have their own drive, preferably their own drive motor.

5. Production plant (1) according to any of claims 1 to 4, **characterized in that** every rail vehicle (5) has at least one running wheel (6), by which it is movably mounted on the rail arrangement (4).

6. Production plant (1) according to any of claims 1 to 5, **characterized in that**, at least in some regions, the rail arrangement (4) comprises rails (7) which are arranged parallel to each other, on which the rail vehicles (5) can travel in parallel with each other.

7. Production plant (1) according to any of claims 1 to 6, **characterized in that** the respective mold (2) is arranged on a pivoting arm (8) of the respective rail vehicle (5), wherein the pivoting arm (8) together with the mold (2) is arranged on the rail vehicle in such a way as to be pivotable in a motor-driven manner, and/or **in that** the mold (2) is arranged on the rail vehicle (5) in such a way as to be rotatable about a longitudinal axis (9) of the mold (2) in a motor-driven manner.

8. Production plant (1) according to any of claims 1 to 7, **characterized in that** the mold (2) on the rail vehicle (5) is heatable by means of a heating device (10), preferably to a temperature in the range from 20°C to 190°C, and/or has an electrostatically chargeable surface (11).

9. Production plant (1) according to any of claims 1 to 8, **characterized in that** the mold (2) is attached or attachable to the rail vehicle (5) by means of a releasable coupling device (12).

10. Production plant (1) according to any of claims 1 to 9, **characterized in that** the station (3) for depositing polymer on the molds (2) is a dipping station (13) for dipping the molds (2) into a polymer bath (14) or a spraying station (15) for spraying polymer onto the molds (2).

## Revendications

1. Installation de production (1) destinée à la fabrication de produits en polymère, en particulier de gants, l'installation de production (1) comportant un dispositif de transport destiné au transport de moules (2) et plusieurs stations (3), différentes les unes des autres, destinées à la réalisation de différents procédés de traitement lors de la fabrication des produits en polymère, au moins une des stations (3) étant une station (3) destinée au dépôt de polymère sur les moules (2), le dispositif de transport comportant un agencement de rails (4) et une pluralité de véhicules sur rails (5) pouvant se déplacer sur l'agencement de rails (4), au moins un des moules (2) étant disposé sur chacun des véhicules sur rails (5), **caractérisée en ce que** l'agencement de rails (4) est disposé à côté d'au moins une des stations (3) de telle sorte que le véhicule sur rails (5) concerné passe à côté de cette station (3) et que seul le moule (2) disposé sur le véhicule sur rails (5) concerné, ou les moules (2) disposés sur le véhicule sur rails (5) concerné, sont introduits dans cette station (3).

2. Installation de production (1) selon la revendication 1, **caractérisée en ce que** les véhicules sur rails (5) sont disposés, au moins par endroit, les uns derrière les autres sur l'agencement de rails (4), des états de fonctionnement étant prévus dans lesquels au moins un des véhicules sur rails (5) est déplaçable sur l'agencement de rails (4) entre le véhicule sur rails (5) disposé devant lui et le véhicule sur rails (5) disposé derrière lui, indépendamment de la vitesse du véhicule sur rails (5) disposé devant lui et du véhicule sur rails (5) disposé derrière lui.

3. Installation de production (1) selon la revendication 1 ou 2, **caractérisée en ce qu'**au moins certains des véhicules sur rails (5), de préférence chaque véhicule sur rails (5), peuvent être entraînés individuellement pour se déplacer le long de l'agencement de rails (4).

4. Installation de production (1) selon l'une des revendications 1 à 3, **caractérisée en ce qu'**au moins certains des véhicules sur rails (5), de préférence chaque véhicule sur rails (5), comportent/comporte un entraînement qui lui est propre, de préférence un moteur d'entraînement qui lui est propre.

5. Installation de production (1) selon l'une des revendications 1 à 4, **caractérisée en ce que** chaque véhicule sur rails (5) comporte au moins une roue de roulement (6), au moyen de laquelle il est monté sur l'agencement de rails (4) de manière à pouvoir se déplacer.

6. Installation de production (1) selon l'une des revendications 1 à 5, **caractérisée en ce que** l'agencement de rails (4) comporte, au moins par endroit, des rails (7) disposés parallèlement les uns aux autres, sur lesquels les véhicules sur rails (5) peuvent circuler parallèlement les uns aux autres.

7. Installation de production (1) selon l'une des revendications 1 à 6, **caractérisée en ce que** chaque moule (2) est disposé sur un bras pivotant (8) du véhicule sur rails (5) concerné, le bras pivotant (8), conjointement avec le moule (2), étant disposé sur le véhicule sur rails (5) de manière pivotante sous l'action d'un entraînement motorisé, et/ou **en ce que** le moule (2) est disposé sur le véhicule sur rails (5) de manière à pouvoir tourner autour d'un axe longitudinal (9) du moule (2) sous l'action d'un entraînement motorisé.

8. Installation de production (1) selon l'une des revendications 1 à 7, **caractérisée en ce que** le moule (2) peut être chauffé sur le véhicule sur rails (5) au moyen d'un dispositif de chauffage (10), de préférence à une température comprise dans l'intervalle allant de 20 °C à 190 °C, et/ou comporte une surface (11) pouvant être chargée électrostatiquement.

9. Installation de production (1) selon l'une des revendications 1 à 8, **caractérisée en ce que** le moule (2) est fixé, ou peut être fixé au véhicule sur rails (5) au moyen d'un dispositif d'accouplement démontable (12).

10. Installation de production (1) selon l'une des revendications 1 à 9, **caractérisée en ce que** la station (3) destinée au dépôt de polymère sur les moules (2) est une station d'immersion (13) destinée à immerger les moules (2) dans un bain de polymère (14), ou une station de pulvérisation (15) destinée à pulvériser du polymère sur les moules (2).
